# EUROPEAN PATENT SPECIFICATION

(11) **EP 1 824 919 B1**
(45) Date of publication and mention of the grant of the patent: **09.12.2009**
(21) Application number: 05815592.0
(22) Date of filing: 07.12.2005
(51) Int. Cl.: C08K 5/00, C08K 5/16, C08K 5/17, C08K 5/20

(54) **STABILIZED ORGANIC MATERIALS CONTAINING FILLERS**
STABILISIERTE FÜLLSTOFFHALTIGE MATERIALIEN
MATÉRIAUX ORGANIQUES STABILISÉS CONTENANT DES CHARGES

(30) Priority: 16.12.2004 EP 04106626
(43) Date of publication of application: 29.08.2007
(73) Proprietor: BASF SE, 67056 Ludwigshafen (DE)
(72) Inventor: ROTZINGER, Bruno, CH-2800 Delémont (CH)
(86) International application number: PCT/EP2005/056548
(87) International publication number: WO 2006/063957

(56) References cited:
- EP-A- 0 382 875
- WO-A-81/02395
- WO-A-97/12856
- GB-A- 1 104 567
- US-A- 3 919 429
- US-A- 4 839 414
- PATENT ABSTRACTS OF JAPAN vol. 1998, no. 02, 30 January 1998 (1998-01-30) & JP 09 272705 A (NIPPON SHOKUBAI CO LTD), 21 October 1997 (1997-10-21)

## Description

The present invention relates to compositions comprising a synthetic polymer, subject to oxidative, thermal or light-induced degradation, containing a filler, and as additives at least a monomeric or polymeric dispersing or solvating agent free of nitrogen atoms having amphiphilic properties, at least a monomeric or polymeric dispersing agent having amphiphilic properties containing an amido group or an ethoxylated amino group, and a stabilizer, to the use of these additives in synthetic polymers containing a filler, in particular thermoplastic polymers, as well as to a process for stabilising these materials containing a filler.

The addition of fillers to organic materials, especially polymers, is known and is described for example in Hans Zweifel (editor), Plastics Additives Handbook, 5th Edition, pages 901-948, Hanser Publishers, Munich 2001. The use of fillers in polymers has the advantage that it is possible to bring about improvement in, for example, the mechanical properties, especially the density, hardness, rigidity (modulus) or reduced shrinkage of the polymer.

For the purpose of improving the adhesion and compatibility of the fillers with the organic materials, the fillers are preferably provided with a coating before being employed in the organic materials, preferably polymers.

The known coating compositions or adhesion promoters do not in all respects satisfy the demands which should be met by a coating composition for a filler which is to be employed in an organic material, especially a polymer.

It has now been found that an additive blend which comprises a monomeric or polymeric dispersing or solvating agent free of nitrogen atoms having amphiphilic properties, a monomeric or polymeric dispersing or solvating agent having amphiphilic properties containing an amido group or an ethoxylated amino group, and a stabilizer, is particularly suitable as stabilizer for synthetic polymers and, simultaneously, as coating compositions for fillers which are employed in organic materials sensitive to oxidative, thermal and/or light-induced degradation. These additive blends show as synergistic effect.

The present invention therefore provides a stabilized composition as defined in claim 1.

Components (c), (d) and (e) are suitable for stabilizing synthetic polymers containing a filler against oxidative, thermal or light-induced degradation. Examples of such materials are:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the precedent paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).

   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Cellulose, rubber, gelatin and chemically modified homologues derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.

Particularly preferred synthetic polymers are thermoplastic polymers. Especially preferred synthetic polymers are polyolefins such as polypropylene or polyethylene or polystyrenes.

To be singled out for special mention is also the efficacy of the additive blend of components (c), (d) and (e) against oxidative or thermal degradation, especially under the action of heat which occurs during the processing, for example extrusion, of thermoplasts containing a filler and the long-term stability of such synthetic polymers.

Preferred fillers are for example natural or synthetic phyllosilicates or a mixture of such phyllosilicates. Fillers of special interest are for example layered silicate clays. Of very special interest are compositions comprising as component (b) a montmorillonite, bentonite, beidelite, mica, hectorite, saponite, nontronite, sauconite, vermiculite, ledikite, magadite, kenyaite, stevensite, volkonskoite, hydrotalcite, illite, kaolinite, wollastonite, attapulgite, talc or silica or a mixture thereof.

Compounds from the hydrotalcite series can be described by the general formula F1

M²⁺₁₋ₓ • M³⁺ₓ • (OH)₂ • (A^{y-})_{x/y} • pH₂O (F1),

wherein
- M²⁺: = Mg, Ca, Sr, Zn, Sn and/or Ni,
- M³⁺: = Al, B or Bi,
- A^{y-}: is an anion having the valency y,
- y: is a number from 1-4,
- x: is a number from 0-0.5, and
- p: is a number from 0-20;
further examples are to be found in DE-A-4106403.
A^{y-} is preferably OH⁻, Cl⁻, Br⁻, I⁻, ClO₄⁻, HCO₃⁻, CH₃COO⁻, C₆H₅COO⁻, CO₃²⁻, SO₄²⁻, (⁻OOC-COO⁻), (CHOHCOO)₂²⁻, (CHOH)₄CH₂OHCOO⁻. C₂H₄(COO)₂²⁻, (CH₂COO)₂²⁻, CH₃CHOHCOO⁻, SiO₃²⁻, SiO₄⁴⁻, Fe(CN)₆³⁻, Fe(CN)₆⁴⁻ or HPO₄²⁻.

Other hydrotalcites which may conveniently be used are compounds of the general formula F1a

M²⁺ₓ • Al₂ • (OH)_{2x+6yz} • (A^{y-})₂ • pH₂O (F1a),

in which formula IIIa M²⁺ is at least one metal from the Mg and Zn series, Mg being preferred, and A^{y-} is an anion, for example from the CO₃²⁻, (⁻OOC-COO⁻), OH⁻ and S²⁻ series, y is the valency of the anion, p is a positive number, preferably from 0.5 to 15, and x and z are positive numbers, x preferably being 2 to 6 and z being smaller than 2.

Preferred compounds from the hydrotalcite series are those of the general formula F1

M²⁺₁₋ₓ • M³⁺ₓ • (OH)₂ • (A^{y-})_{x/y} • pH₂O (F1),

wherein M²⁺ is Mg or a solid solution of Mg and Zn, A^{y-} is CO₃²⁻, x is a number from 0 to 0.5, and p is a number from 0 to 20.

Particularly preferred hydrotalcites are those of formulae

Al₂O₃ • 6MgO • CO₂ • 12H₂O,

Mg_{4,5}Al₂(OH)₁₃ • CO₃ • 3,5H₂O,

4MgO • Al₂O₃ • CO₂ • 9H₂O,

4MgO • Al₂O₃ • CO₂ • 6H₂O,

ZnO • 3MgO • Al₂O₃ • CO₂ • 8-9H₂O or

ZnO • 3MgO • Al₂O₃ • CO₂ • 5-6H₂O.

Preferred zeolites are known from "Atlas of Zeolite Structure Types", W.M. Meier and D.H. Olson, Verlag Butterworths, 2nd edition 1986.

In a broader sense, the zeolites also include aluminium phosphates having a zeolite structure.

The preferred zeolites which are known per se have a pore diametre of average effectiveness of 3-5A and can be prepared by known methods. Particularly preferred zeolites are those of the NaA type which have a pore diametre of average effectiveness of 4A, which is why they are also called zeolites 4A.

Particularly preferred are crystalline sodium alumosilicates, the particle size of which is at least predominantly in the range from 1-10µ. Particularly preferred zeolites are:
Na₁₂Al₁₂Si₁₂O₄₈ • 27 H₂O [zeolite A],
Na₆Al₆Si₆O₂₄ • 2 NaX • 7,5 H₂O, X= OH, halogen, ClO₄ [sodalite]
Na₆Al₆Si₃₀O₇₂ • 24 H₂O,
Na₈Al₈Si₄₀O₉₆ • 24 H₂O,
Na₁₆Al₁₆Si₂₄O₈₀ • 16 H₂O,
Na₁₆Al₁₆Si₃₂O₉₆ • 16 H₂O,
Na₅₆Al₅₆Si₁₃₆O₃₈₄ • 250 H₂O, [zeolite Y]
Na₈₆Al₈₆Si₁₀₆O₃₈₄ • 264 H₂O [zeolite X],
or those zeolites which can be prepared by partial or complete exchange of the sodium atoms with Li, K, Mg, Ca, Sr or Zn atoms, such as
(Na,K)₁₀Al₁₀Si₂₂O₆₄ • 20 H₂O
Ca₄,₅Na₃[(AlO₂)₁₂(SiO₂)₁₂] • 30 H₂O
K₉Na₃[(AlO₂)₁₂(SiO₂)₁₂] • 27 H₂O.

The fillers can be used in an amount from e.g. 0.1 to 70, usefully from 0.1 to 50 and, preferably, from 0.5 to 50 parts by weight, based on 100 parts by weight of the organic material.

Monomeric or polymeric dispersing or solvating agents free of nitrogen atoms having amphiphilic properties [component (c)] are monomeric or polymeric dispersing or solvating agents which have hydrophilic and lipophilic properties [see "Römpp Lexikon Chemie, 10. Auflage, 1996, page 180" for the definition of amphiphilic properties]. Such compounds are, e.g., dispersing or solvating agents based on polyethylene glycols (PEG), polyacrylates, polysiloxanes, polyvinyl acetate or block copolymers containing at least one block copolymer based on acrylate, acrylic acid or methacrylate. Oligomeric structures are also possible. They are usually copolymers, for example random copolymers, or block copolymers which can be prepared by known polymerisation reactions, for example by radical or anionic polymerisation, by polycondensation reactions, such as by reaction of end-functionalised oligomeric or comb polymers, which polymers may be prepared e.g. by graft reaction. Block copolymers are, for example, diblock copolymers (A-B type) or triblock copolymers (A-B-A or A-B-C type) and so-called tapered structures.

Diblock copolymers (A-B type) are, for example, poly(styrene-b-methylmethacrylate), poly-(styrene-b-tert-butylmethacrylate), poly(styrene-b-methylacrylate), poly(styrene-b-n-butylacrylate), poly(styrene-b-tert-butylacrylate), poly(styrene-b-butadiene), poly(styrene-b-isoprene[1,4-addition]), tapered block copolymer poly(styrene-b-butadiene), tapered block copolymer poly(styrene-b-ethylene), poly(styrene-bis-tert-butylstyrene), poly(styrene-b-dimethylsiloxane), poly(butadiene-b-dimethylsiloxane), poly(butadiene[1,4-addition]-b-methylmethacrylate), poly(isoprene[1-4-addition]-b-methylmethacrylate), poly(butadiene-b-tert-butylmethacrylate), poly(butadiene-b-tert-butylacrylate), poly(styrene-b-methylmethacrylate), poly(methylmethacrylate-b-tert-butylmethacrylate), poly(methylmethacrylate-b-tert-butylacrylate), poly(tert-butylacrylate-b-methylmethacrylate), poly(n-butylacrylate-b-methylmethacrylate), poly(2-vinylpyridine-b-methylmethacrylate), poly(tert-butylmethacrylate-b-tert-butylacrylate) or poly(ethylene-b-methylmethacrylate).

Triblock copolymers of the A-B-A type are, for example, poly(methylmethacrylate-b-styrene-b-methylmethacrylate), poly(tert-butylmethacrylate-b-styrene-b-tert-butylmethacrylate), poly-(tert-butylacrylate-b-styrene-b-tert-butylacrylate), poly(butadiene[1,2-addition]-b-styrene-b-butadiene[1,2-addition]), poly(butadiene[1,4-addition]-b-styrene-b-butadiene[1,4-addition]), poly(styrene-b-butadiene[1,4- and 1,2-addition]-b-styrene), poly(methylmethacrylate-b-butadiene[1,4- or 1,2-addition]-b-methylmethacrylate), poly(tert-butyl-methacrylate-b-methylmethacrylate-b-tert-butylmethacrylate), poly(tert-butylacrylate-b-methylmethacrylate-b-tert-butylacrylate), poly(methylmethacrylate-b-2-vinylpyridine-b-methylmethacrylate), poly(methylmethacrylate-b-tert-butylacrylate-b-methylmethacrylate), poly(methylmethacrylate-b-n-butylacrylate-b-methylmethacrylate), poly(tert-butyl methacrylate-b-tert-butylacrylate-b-tert-butylmethacrylate), poly(styrene-b-n-butylacrylate-b-styrene), poly(styrene-b-ethylacrylate-b-styrene), poly(styrene-b-ethylene-b-styrene), poly(styrene-b-butylene-b-styrene), poly(ethylene oxide-b-styrene-b-ethylene oxide), poly(styrene-b-ethylene oxide-b-styrene) or poly(styrene-b-acrylic acid-b-styrene).

Triblock copolymers of the A-B-C type are, for example, poly(butadiene-b-styrene-b-methylmethacrylate), poly(styrene-b-butadiene-b-methylmethacrylate), poly(styrene-b-tert-butylacrylate-b-methylmethacrylate), poly(styrene-b-acrylic acid-b-methylmethacrylate), poly(styrene-b-a-methylstyrene-b-methylmethacrylate) or poly(styrene-b-a-methylstyrene-b-tert-butylacrylate).

Long-chain block copolymers of particular interest have a chain length of more than 10 carbon atoms, preferably of C₁₂-C₁₈carbon atoms.

A particularly suitable component (c) is, for example, poly(butadienemethylmethacrylate), poly(isoprenemethylmethacrylate), poly(ethylenemethylmethacrylate), poly(styrene-n-butylacrylate), poly(styrene-tert-butylacrylate), poly(styrene sodium acrylate), poly(styrene-acrylic acid), poly(methylmethacrylate sodium acrylate), poly(methylmethacrylate sodium methacrylate), poly(ethylene oxide-ε-caprolactone), poly(butadiene-ethylene oxide), poly(butadiene sodium acrylate), poly(ethylene-ethylene oxide), poly(ethylene-propylene oxide), poly(styrene-ethylacrylate-styrene), poly(ethylene oxide-styrene-ethylene oxide), poly(styrene-acrylic acid-styrene), poly(styrenebutadienemethylmethacrylate), poly(styrene-vinylpyridine-ethylene oxide), poly(styrene-4-vinylbenzoic acid), poly(styrene-polyglycidyl-methacrylate), poly(ethylene-glycidyl methacrylate), poly(propylene acrylic acid), poly(ethylene acrylic acid), poly(propylenemaleic anhydride), poly(ethylenemaleic anhydride), poly(styrenemaleic anhydride), polymethacrylic acid-polyalkylene oxide block copolymers, for example according to EP-A-0 859 028, polysiloxane-polyoxyalkylene, copolymers of maleates and styrene or styrene derivatives, for example according to EP-A-0 791 024, polystyrene-polysiloxane block copolymers, polyacrylate-polysiloxane block copolymers and cyclosiloxane-radiale copolymers, prepared e.g. using ATRP technology according to EP-A-0 870 774, methylacrylate-styrene copolymer, methylmethacrylate-styrene, polybutadiene-methylacrylates, prepared by nitroxyl-initiated radical polymerisation according to EP-A-0 135 280.

The polyalkylene oxides are preferably polyethylene oxide, polypropylene oxide and polybutylene oxide.

Suitable block copolymers are, for example, polyacrylate/polystyrene, polymethacrylate/polyethylene oxide, polyacrylate/polyethylene oxide, polyacrylate/polyethylene, polyvinyl acetate/ polyethylene, polystyrene/polybutadiene, polyacrylate/polybutadiene, polyacrylate/polyisoprene, polyisoprene/polymethylmethacrylate, polyethylene/polymethylmethacrylate, polyethylene/polyethylene oxide or polyethylene/polypropylene oxide.

A particularly suitable component (c) is a dispersing or solvating agent based on polyacrylates, polysiloxanes, polyvinyl acetate or on block copolymers containing at least one block based on acrylate, acrylic acid or methacrylate; oxidized polyolefin; ethylene vinyl acetate copolymer; ethylene acrylic acid copolymer; partially hydrolized polyvinyl acetate; with C₁₂-C₂₅alkyl substituted anhydrides; epoxidized soybean oil: or esters of polyhydric alcohols with saturated or unsaturated C₁₂-C₂₅carboxylic acids.

Particularly preferred polysiloxanes containing long-chain side groups are disclosed, inter alia, in US-5,387,467.

Other likewise preferred dispersing or solvating agents based on polyacrylates are described, inter alia, in US-5,133,898.

A particularly preferred component (c) is, for example, Tegomer^{®}DA 100 or Tegomer^{®}DA 102 of Th. Goldschmidt AG, Germany, Irgastab CA 100 (RTM) of Ciba Specialty Chemicals Inc., Switzerland, A-C 395 (RTM), A-C 400 (RTM) or A-C 540 (RTM) of Honeywell, Erkol V 03/300 (RTM) of Acetex, Spain, DDSA (2-dodecenylsuccinic anhydride), Atmer 103 (RTM) of Uniquema which is stearyl sorbitane, CGX Pipe 200 (RTM) which is ethoxylated soybean oil, Prisorine 2041 (RTM) of Uniquema which is glycerol tris(isostearate), Sefose 1618H (RTM) of Procter & Gamble which is an ester of stearic acid with sucrose, Sefose 1618SC (RTM) of Procter & Gamble which is an ester of oleic acid with sucrose, or Araldite GT 7072 (RTM) of Huntsman which is a bisphenol A diglycidyl ether.

Component (c) will preferably be added to the organic material to be stabilized in concentrations of from 0.01 to 10 %, preferably 0.01 to 5 %, typically 0.01 to 2 %, based on the weight of the organic material.

Of interest are compositions wherein component (d) is a compound of the formula I 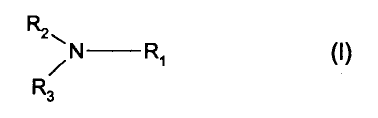 wherein,
R₁ is hydrogen, -CH₂CH₂OH, -CH₂CH₂OCH₂CH₂OH or -CH₂CH₂OCH₂CH₂OCH₂CH₂OH; or 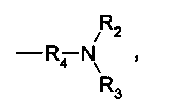
R₂ is 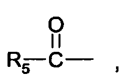 C₆-C₂₅alkyl or C₆-C₂₅alkenyl,
R₃ is hydrogen, -CH₂CH₂OH, -CH₂CH₂OCH₂CH₂OH or -CH₂CH₂OCH₂CH₂OCH₂CH₂OH,
R₄ is a direct bond or C₂-C₁₈alkylene, and
R₅ is C₆-C₂₅alkyl or C₆-C₂₅alkenyl; with the proviso that the compound of formula I contains at least an amido group or an ethoxylated amino group.

Alkyl having 6 to 25 carbon atoms is a branched or unbranched radical , for example hexyl, heptyl, octyl, nonyl, decyl, undecyl, dodecyl, 1,1,3,3,5,5-hexamethylhexyl, tridecyl, tetradecyl, pentadecyl, hexadecyl, heptadecyl, octadecyl, eicosyl or docosyl.

Alkenyl having 6 to 25 carbon atoms is a branched or unbranched radical containing at least one carbon-carbon double bond, for example hexenyl, heptenyl, octenyl, nonenyl, decenyl, undecenyl, dodecenyl, 1,1,3,3,5,5-hexamethylhexenyl, tridecenyl, tetradecenyl, pentadecenyl, hexadecenyl, heptadecenyl or octadecenyl.

Especially preferred compounds of the formula I are Atmer SA 1753 (RTM) of Uniquema [erucamide of the formula D1], Atmer SA 1760 (RTM) of Uniquema [compound of the formula D2] and Atmer 263 (RTM) of Uniquema [hydrogenated tallowbis(2-hydroxyaethyl)amine of the formula D3].

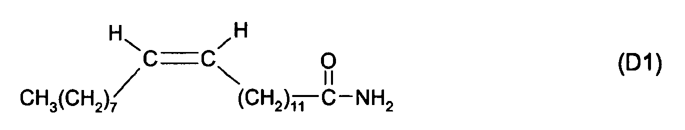

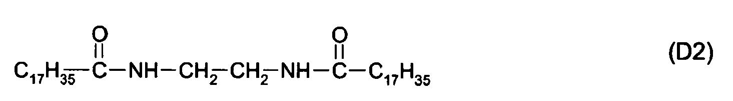

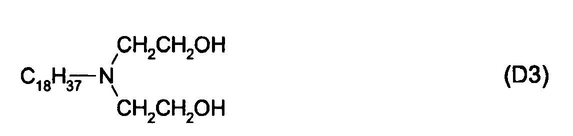

Component (d) will preferably be added to the organic material to be stabilized in concentrations of from 0.01 to 10 %, preferably 0.01 to 5 %, typically 0.01 to 2 %, based on the weight of the organic material.

Stabilizers of special interest [component (e)] are for example the following:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-didodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. Tocopherols, for example α-tocopherol, β-tocopherol, γ-tocopherol, δ-tocopherol and mixtures thereof (vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.

1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]undecane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.

### 2. UV absorbers and light stabilizers

2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO-CH₂CH₂]₂ , where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]benzotriazole; 2-[2'-hydroxy-3'-(1,1,3,3-tetramethylbutyl)-5'-(α,α-dimethylbenzyl)-phenyl]benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.

2.5. Nickel compounds, for example nickel complexes of 2,2'-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)amino)-s-triazine.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.8. 2-(2-Hydroxyphenyl)-1.3.5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine; 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.

3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

7. Thiosynergists, for example dilauryl thiodipropionate, dimistryl thiodipropionate, distearyl thiodipropionate or distearyl disulfide.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)-benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctylbenzofuran-2-one.

The stabilizers are added, for example, in concentrations of from 0.01 to 10%, based on the overall weight of the synthetic polymer to be stabilized.

Preferably, component (e) is a phenolic antioxidant, an organic phosphite or phosphonite, a thio-synergist, a light stabilizer, a benzofuranone, a hydroxylamine and/or a metal deactivator such as for example alkaline earth metal salts of higher fatty acids, for example calcium stearate, calcium lactate and/or calcium stearoyl-2-lactylate.

Further preferred compositions comprise in addition to components (a), (b), (c), (d) and (e) further additives as well. Examples of such further additive are:

10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

11. Nucleating agents, for example inorganic substances, such as metal oxides, such as titanium dioxide or magnesium oxide, phosphates, carbonates or sulfates of, organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.

12. Other additives, for example plasticisers, lubricants, emulsifiers, pigments, rheology additives, catalysts, flow-control agents, optical brighteners, flameproofing agents, antistatic agents and blowing agents.

Components (b), (c), (d) and (e) and other optional additives are incorporated into the organic polymeric material according to known methods, for example before or during shaping to moulded articles or alternatively by coating the organic polymeric material with a solution or dispersion of the compounds and subsequently evaporating the solvent. The components can also be added to the materials to be stabilized in the form of a master batch which contains these components, typically in a concentration of, for example, from 2.5 to 25 % by weight.

The components (b), (c), (d) and (e) may also be added before or during polymerization or before crosslinking.

Components (b), (c), (d) and (e), and where applicable further additives, may be incorporated into the material to be stabilized in pure form or encapsulated in waxes, oils or polymers.

Components (b), (c), (d) and (e), and where applicable further additives, may also be sprayed onto the polymer to be stabilized. They are able to be used to dilute other additives (e.g. the above-mentioned conventional additives) or melts thereof, so that they can also be sprayed together with these additives onto the polymer to be stabilized. Application by spraying during the deactivation of the polymerization catalysts is especially advantageous, in which case spraying is conveniently effected with the vapour used for deactivation.

The materials stabilized in this way can be employed in a wide variety of forms, for example as films, fibres, tapes, moulding compositions, profiles or as binders for coating materials, especially powder coatings, adhesives or putties.

The polyolefins stabilized in this way can likewise be employed in a wide variety of forms, especially as thick-layer polyolefin mouldings which are in long-term contact with extractive media, such as, for example pipes for liquids or gases, films, geomembranes, tapes, strips, profiles or tanks.

The preferred thick-layer polyolefin mouldings have a layer thickness of from 1 to 50 mm, in particular from 1 to 30 mm, for example from 2 to 10 mm.

The term geomembranes refers to films which are employed, for example, in landfill sites and are required to have a service life of up to 300 years.

Extractive media are, for example, liquid or gaseous inorganic or organic materials.

Examples of gaseous inorganic materials are oxygen; nitrogen; oxides of nitrogen; for example NO, laughing gas or NO₂; oxides of sulfur, for example sulfur dioxide; halogens, for example fluorine or chlorine; Brönstedt acids, for example hydrofluoric acid, hydrochloric acid, hydrobromic acid, hydroiodic acid or hydrocyanic acid; or bases, for example ammonia.

Examples of gaseous organic materials are C₁-C₄alkanes, for example methane, ethane, propane or butane; carbon monoxide; carbon dioxide; or phosgene.

Examples of liquid inorganic materials are water, chlorinated drinking water or aqueous salt solutions, for example sodium chloride solution (brine) or sodium sulfate solution; bromine; acid halides, e.g. titanium tetrachloride, thionyl chloride, nitrosyl chloride or trimethylsilyl chloride; alkalis, for example aqueous sodium hydroxide (NaOH), aqueous potassium hydroxide (KOH), aqueous ammonia solution, aqueous sodium bicarbonate solution or aqueous sodium carbonate solution.

Examples of liquid organic materials are organic solvents or liquid organic reagents.

Examples of organic solvents are aliphatic hydrocarbons, for example pentane, hexane, heptane, octane, petroleum spirit, nonane or decane; alcohols, for example methanol, ethanol, isopropanol, butanol, pentanol, amyl alcohol, cyclohexanol, pentaerythritol, ethylene glycol, ethylene diglycol, methylcellosolve, polyethylene glycol or glycerol; ketones, for example acetone, diethyl ketone, methyl ethyl ketone, diphenyl ketone or cyclohexanone; ethers, for example diethyl ether, dibutyl ether, tetrahydrofuran or dioxane; aromatic hydrocarbons, for example benzene, toluene or xylene; heterocyclic solvents, for example furan, pyridine, 2,6-lutidine or thiophene; dipolar aprotic solvents, for example dimethylformamide, diethylacetamide or acetonitrile; or surfactants.

For the purposes of the present invention, extractive media are also mixtures and solutions, especially aqueous mixtures, emulsions or solutions, of liquid or gaseous inorganic and organic materials as listed above.

Of particular interest are those extractive media which are important in the chemical industry or in landfill sites.

The compositions according to the invention can be advantageously used for the preparation of various shaped articles. Examples are:
I-1) Floating devices, marine applications, pontoons, buoys, plastic lumber for decks, piers, boats, kayaks, oars, and beach reinforcements.
I-2) Automotive applications, in particular bumpers, dashboards, battery, rear and front linings, moldings parts under the hood, hat shelf, trunk linings, interior linings, air bag covers, electronic moldings for fittings (lights), panes for dashboards, headlamp glass, instrument panel, exterior linings, upholstery, automotive lights, head lights, parking lights, rear lights, stop lights, interior and exterior trims; door panels; gas tank; glazing front side; rear windows; seat backing, exterior panels, wire insulation, profile extrusion for sealing, cladding, pillar covers, chassis parts, exhaust systems, fuel filter / filler, fuel pumps, fuel tank, body side mouldings, convertible tops, exterior mirrors, exterior trim, fasteners / fixings, front end module, glass, hinges, lock systems, luggage / roof racks, pressed/stamped parts, seals, side impact protection, sound deadener / insulator and sunroof.
I-3) Road traffic devices, in particular sign postings, posts for road marking, car accessories, warning triangles, medical cases, helmets, tires.
I-4) Devices for plane, railway, motor car (car, motorbike) including furnishings.
I-5) Devices for space applications, in particular rockets and satellites, e.g. reentry shields.
I-6) Devices for architecture and design, mining applications, acoustic quietized systems, street refuges, and shelters.
II-1) Appliances, cases and coverings in general and electric/electronic devices (personal computer, telephone, portable phone, printer, television-sets, audio and video devices), flower pots, satellite TV bowl, and panel devices.
II-2) Jacketing for other materials such as steel or textiles.
II-3) Devices for the electronic industry, in particular insulation for plugs, especially computer plugs, cases for electric and electronic parts, printed boards, and materials for electronic data storage such as chips, check cards or credit cards.
II-4) Electric appliances, in particular washing machines, tumblers, ovens (microwave oven), dish-washers, mixers, and irons.
II-5) Covers for lights (e.g. street-lights, lamp-shades).
II-6) Applications in wire and cable (semi-conductor, insulation and cable-jacketing).
II-7) Foils for condensers, refrigerators, heating devices, air conditioners, encapsulating of electronics, semi-conductors, coffee machines, and vacuum cleaners.
III-1) Technical articles such as cogwheel (gear), slide fittings, spacers, screws, bolts, handles, and knobs.
III-2) Rotor blades, ventilators and windmill vanes, solar devices, swimming pools, swimming pool covers, pool liners, pond liners, closets, wardrobes, dividing walls, slat walls, folding walls, roofs, shutters (e.g. roller shutters), fittings, connections between pipes, sleeves, and conveyor belts.
III-3) Sanitary articles, in particular shower cubicles, lavatory seats, covers, and sinks.
III-4) Hygienic articles, in particular diapers (babies, adult incontinence), feminine hygiene articles, shower curtains, brushes, mats, tubs, mobile toilets, tooth brushes, and bed pans.
III-5) Pipes (cross-linked or not) for water, waste water and chemicals, pipes for wire and cable protection, pipes for gas, oil and sewage, guttering, down pipes, and drainage systems.
III-6) Profiles of any geometry (window panes) and siding.
III-7) Glass substitutes, in particular extruded or co-extruded plates, glazing for buildings (monolithic, twin or multiwall), aircraft, schools, extruded sheets, window film for architectural glazing, train, transportation, sanitary articles, and greenhouse.
III-8) Plates (walls, cutting board), extrusion-coating (photographic paper, tetrapack and pipe coating), silos, wood substitute, plastic lumber, wood composites, walls, surfaces, furniture, decorative foil, floor coverings (interior and exterior applications), flooring, duck boards, and tiles.
III-9) Intake and outlet manifolds.
III-10) Cement-, concrete-, composite-applications and covers, siding and cladding, hand rails, banisters, kitchen work tops, roofing, roofing sheets, tiles, and tarpaulins.
IV-1) Plates (walls and cutting board), trays, artificial grass, astroturf, artificial covering for stadium rings (athletics), artificial floor for stadium rings (athletics), and tapes.
IV-2) Woven fabrics continuous and staple, fibers (carpets / hygienic articles / geotextiles / monofilaments; filters; wipes / curtains (shades) / medical applications), bulk fibers (applications such as gown / protection clothes), nets, ropes, cables, strings, cords, threads, safety seat-belts, clothes, underwear, gloves; boots; rubber boots, intimate apparel, garments, swimwear, sportswear, umbrellas (parasol, sunshade), parachutes, paraglides, sails, "balloon-silk", camping articles, tents, airbeds, sun beds, bulk bags, and bags.
IV-3) Membranes, insulation, covers and seals for roofs, tunnels, dumps, ponds, dumps, walls roofing membranes, geomembranes, swimming pools, curtains (shades) / sun-shields, awnings, canopies, wallpaper, food packing and wrapping (flexible and solid), medical packaging (flexible & solid), airbags/safety belts, arm- and head rests, carpets, centre console, dashboard, cockpits, door, overhead console module, door trim, headliners, interior lighting, interior mirrors, parcel shelf, rear luggage cover, seats, steering column, steering wheel, textiles, and trunk trim.
V) Films (packaging, dump, laminating, agriculture and horticulture, greenhouse, mulch, tunnel, silage), bale wrap, swimming pools, waste bags, wallpaper, stretch film, raffia, desalination film, batteries, and connectors.
VI-1) Food packing and wrapping (flexible and solid), bottles.
VI-2) Storage systems such as boxes (crates), luggage, chest, household boxes, pallets, shelves, tracks, screw boxes, packs, and cans.
VI-3) Cartridges, syringes, medical applications, containers for any transportation, waste baskets and waste bins, waste bags, bins, dust bins, bin liners, wheely bins, container in general, tanks for water / used water / chemistry / gas / oil / gasoline / diesel; tank liners, boxes, crates, battery cases, troughs, medical devices such as piston, ophthalmic applications, diagnostic devices, and packing for pharmaceuticals blister.
VII-1) Extrusion coating (photo paper, tetrapack, pipe coating), household articles of any kind (e.g. appliances, thermos bottle / clothes hanger), fastening systems such as plugs, wire and cable clamps, zippers, closures, locks, and snap-closures.
VII-2) Support devices, articles for the leisure time such as sports and fitness devices, gymnastics mats, ski-boots, inline-skates, skis, big foot, athletic surfaces (e.g. tennis grounds); screw tops, tops and stoppers for bottles, and cans.
VII-3) Furniture in general, foamed articles (cushions, impact absorbers), foams, sponges, dish clothes, mats, garden chairs, stadium seats, tables, couches, toys, building kits (boards / figures / balls), playhouses, slides, and play vehicles.
VII-4) Materials for optical and magnetic data storage.
VII-5) Kitchen ware (eating, drinking, cooking, storing).
VII-6) Boxes for CD's, cassettes and video tapes; DVD electronic articles, office supplies of any kind (ball-point pens, stamps and ink-pads, mouse, shelves, tracks), bottles of any volume and content (drinks, detergents, cosmetics including perfumes), and adhesive tapes.
VII-7) Footwear (shoes / shoe-soles), insoles, spats, adhesives, structural adhesives, food boxes (fruit, vegetables, meat, fish), synthetic paper, labels for bottles, couches, artificial joints (human), printing plates (flexographic), printed circuit boards, and display technologies.
VII-8) Devices of filled polymers (talc, chalk, china clay (kaolin), wollastonite, pigments, carbon black, TiO₂, mica, nanocomposites, dolomite, silicates, glass, asbestos).

Thus, a further embodiment of the present invention relates to a shaped article, in particular a film, pipe, profile, bottle, tank or container, fiber containing a composition as described above.

A further embodiment of the present invention relates to a molded article containing a composition as described above. The molding is in particular effected by injection, blow, compression, roto-molding or slush-molding or extrusion.

The present invention also relates to new additive blends, as defined in claim 11.

The preferred components (α), (β) and (γ) are identical to those of components (c), (d) and (e) as described above.

Of special interest are additive blends wherein the weight ratio of components (α) : (β) : (γ) is from 100 : 0.01 : 0.01 to 0.01 : 0.01 : 100 to 0.01 : 100 : 0.01.

This invention also relates to a process for stabilising synthetic polymers containing a filler against oxidative, thermal or light-induced degradation, which comprises incorporating therein, or applying thereto, at least an additive blend comprising a component (α), (β) and (γ).

A preferred embodiment of the present invention is also the use of a blend of components (α), (β) and (γ) as stabilizers for synthetic polymers containing a filler against oxidative, thermal or light-induced degradation.

Components (α), (β) and (γ) preferably employed for the use and process disclosed above are the same as those described for the compositions containing a synthetic polymer [components (c), (d) and (e)].

The following Examples illustrate the invention in more detail. Parts or percentages are by weight.

Example 1: Enhancing the long-term temperature stability of polypropylene containing talc.

2.0 kg of polypropylene powder (Moplen^{®}HF 500 N, of Basell) are mixed to homogeneity in a high-speed mixer with 0.10 % of Irgafos^{®}168 [tris(2,4-di-tert-butylphenyl)phosphite], 0.10 % of Irganox^{®}1010 [pentaerythritol-tetrakis-[3-(3,5-di-tert-butyl-4-hydroxyphenyl)propionate]; 0.05 % of calcium stearate, 500 g 25 % of talc [Talc Extra M 20^{®} of Luzenac/Degussa] and with the additives listed in Tables 1 and 2 (weight-% based on 2.5 kg). This blend is then extruded in a twin-screw extruder, of Berstorff, at a temperature of at most 230°C. After drawing the extrudate through a waterbath to cool, it is granulated. 2 mm thick tensile impact bars are then moulded from these granules by means of an injection moulding machine (Arburg 320 S) at a temperature of at most 240°C. One part of these panels is exposed to artificial ageing in a circulating air oven at 135°C and the other at 150°C. The time until these panels become brittle is measured in days. The more time this takes, the more effective the additives. The results are compiled in Tables 1 and 2.

**Table 1:**

| Examples | Additives | Days until embrittlement at 150°C |
|---|---|---|
| Example 1 a^{a)} | 0.20 % Irgastab CA 100^{c)} | 9 |
| Example 1 b^{a)} | 0.20 % A-C 395^{d)} | 4 |
| Example 1c^{a)} | 0.20 % A-C 400^{e)} | 4 |
| Example 1d^{a)} | 0.20 % A-C 540^{f)} | 4 |
| Example 1e^{a)} | 0.20 % Erkol V 03/300^{g)} | 5 |
| Example 1f^{a)} | 0.20 % DDSA^{h)} | 5 |
| Example 1g^{a)} | 0.20 % Atmer 103ⁱ⁾ | 9 |
| Example 1 h^{a)} | 0.20 % Atmer SA 1753^{j)} | 12 |
| Example 1 i^{a)} | 0.20 % Atmer SA 1760^{k)} | 30 |
| Example 1j^{a)} | 0.20 % Atmer 263^{l)} | 19 |
| Example 1k^{b)} | 0.10 % Irgastab CA 100^{c)} | 42 |
| | 0.10 % Atmer SA 1760^{k)} | |
| Example 1l^{b)} | 0.10 % A-C 395^{d)} | 33 |
| | 0.10 % Atmer SA 1760^{k)} | |
| Example 1m^{b)} | 0.10 % A-C 400^{e)} | 33 |
| | 0.10 % Atmer SA 1760^{k)} | |
| Example 1n^{b)} | 0.10 % A-C 540^{f)} | 37 |
| | 0.10 % Atmer SA 1760^{k)} | |
| Example 1o^{b)} | 0.10 % Erkol V 03/300^{g)} | 34 |
| | 0.10 % Atmer SA 1760^{k)} | |
| Example 1p^{b)} | 0.10 % Atmer 103ⁱ⁾ | 38 |
| | 0.10 % Atmer SA 1760^{k)} | |
| Example 1q^{b)} | 0.10 % DDSA^{h)} | 41 |
| | 0.10 % Atmer SA 1760^{k)} | |
| Example 1r^{b)} | 0.10 % Irgastab CA 100^{c)} | 33 |
| | 0.10 % Atmer 263^{l)} | |
| Example 1s^{b)} | 0.10 % Irgastab CA 100^{c)} | 22 |
| | 0.10 % Atmer SA 1753^{j)} | |

Explanation of footnotes see end of Table 4 (Example 2).

**Table 2:**

| Examples | Additives | Days until embrittlement at 135°C |
|---|---|---|
| Example 1t^{a)} | 0.20 % Atmer SA 1760^{k)} | 54 |
| Example 1u^{b)} | 0.05 % Irgastab CA 100^{c)} | 67 |
| | 0.15 % Atmer SA 1760^{k)} | |
| Example 1v^{b)} | 0.10 % Irgastab CA 100^{c)} | 71 |
| | 0.10 % Atmer SA 1760^{k)} | |
| Example 1w^{b)} | 0.05 % Irgastab CA 100^{c)} | 66 |
| | 0.20 % Atmer SA 1760^{k)} | |
| Example 1x^{b)} | 0.10 % Irgastab CA 100^{c)} | 71 |
| | 0.20 % Atmer SA 1760^{k)} | |
| Example 1y^{b)} | 0.05 % Irgastab CA 100^{c)} | 68 |
| | 0.40 % Atmer SA 1760^{k)} | |
| Example 1z^{b)} | 0.10 % Irgastab CA 100^{c)} | 79 |
| | 0.40 % Atmer SA 1760^{k)} | |

Explanation of footnotes see end of Table 4 (Example 2).

The results disclosed in Tables 1 and 2 clearly reveal that the mixture of additives show a surprising synergistic effect.

Example 2: the long-term temperature stability of polypropylene containing talc.

In analogy to Example 1 further results were obtained. The results are summarized in Tables 3 and 4.

**Table 3:**

| Examples | Additives | Days until embrittlement at 150°C |
|---|---|---|
| Example 2a^{a)} | 0.20 % ESBO^{m)} | 41 |
| Example 2b^{a)} | 0.20 % TSGⁿ⁾ | 7 |
| Example 2c^{a)} | 0.20 % Sefose 16H^{o)} | 7 |
| Example 2d^{a)} | 0.20 % Sefose 16SC^{p)} | 9 |
| Example 2e^{a)} | 0.20 % Atmer SA 1760^{k)} | 30 |
| Example 2f^{b)} | 0.10 % ESBO^{m)} | 45 |
| | 0.10 % Atmer SA 1760^{k)} | |
| Example 2g^{b)} | 0.10 % TSGⁿ⁾ | 31 |
| | 0.10 % Atmer SA 1760^{k)} | |
| Example 2h^{b)} | 0.10 % Sefose 16H^{o)} | 39 |
| | 0.10 % Atmer SA 1760^{k)} | |
| Example 2i^{b)} | 0.10 % Sefose 16SC^{p)} | 38 |
| | 0.10 % Atmer SA 1760^{k)} | |

Explanation of footnotes see end of Table 4 (Example 2).

**Table 4:**

| Examples | Additives | Days until embrittlement at 135°C |
|---|---|---|
| Example 2k^{a)} | 0.20 % ESBO^{m)} | 123 |
| Example 21^{a)} | 0.20 % TSGⁿ⁾ | 16 |
| Example 2m^{a)} | 0.20 % Sefose 16H^{o)} | 21 |
| Example 2n^{a)} | 0.20 % Sefose 16SC^{p)} | 30 |
| Example 2o^{a)} | 0.20 % Atmer SA 1760^{k)} | 54 |
| Example 2p^{b)} | 0.10 % ESBO^{m)} | 133 |
| | 0.10 % Atmer SA 1760^{k)} | |
| Example 2q^{b)} | 0.10 % TSGⁿ⁾ | 101 |
| | 0.10 % Atmer SA 1760^{k)} | |
| Example 2r^{b)} | 0.10 % Sefose 16H^{o)} | 118 |
| | 0.10 % Atmer SA 1760^{k)} | |
| Example 2s^{b)} | 0.10 % Sefose 16SC^{p)} | 122 |
| | 0.10 % Atmer SA 1760^{k)} | |

| | | |
|---|---|---|
| a) Comparison Example. b) Example of this invention. c) Irgastab CA 100 (of Ciba Specialty Chemicals Inc.) is also known as Tegomer^{®}DA 102 (of Th. Goldschmidt AG, Germany) and is an acrylate-based polymeric dispersing or solvating agent. d) A-C 395 (of Honeywell) is an oxidized polyethylene. e) A-C 400 (of Honeywell) is an ethylene vinylacetate copolymer. f) A-C 540 (of Honeywell) is an ethylene acrylic acid copolymer. g) Erkol V 03/300 (of Acetex, Spain) is a partially hydrolized polyvinyl acetete. h) DDSA is 2-dodecenylsuccinic anhydride. i) Atmer 103 (of Uniquema) is stearyl sorbitane. j) Atmer SA 1753 (of Uniquema) is erucamide of the formula D1. 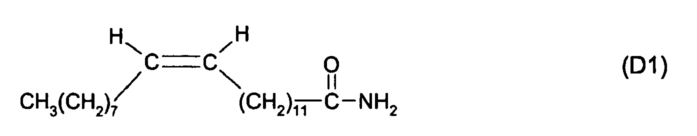 k) Atmer SA 1760 (of Uniquema) is a compound of the formula D2. 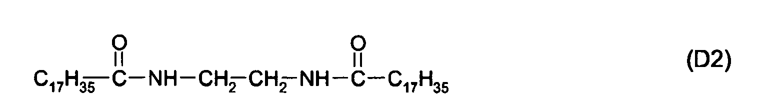 l) Atmer 263 (of Uniquema) is a hydrogenated tallowbis(2-hydroxyethyl)amine of the formula D3. 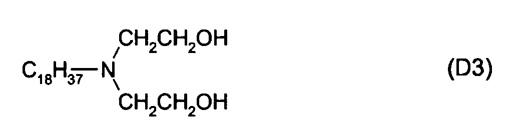 m) ESBO is epoxidized soy bean oil. n) TSG is tristearoyl glycerol. o) Sefose 16H is sorbitan esterified with stearylic acid. p) Sefose 16SC is sorbitan esterified with oelic acid. | | |

The results disclosed in Tables 3 and 4 clearly reveal that the mixture of additives show a surprising synergistic effect.

## Claims

1. A stabilized composition comprising
a) a synthetic polymer subject to oxidative, thermal or light-induced degradation,
b) a filler,
c) a monomeric or polymeric dispersing or solvating agent free of nitrogen atoms having amphiphilic properties, which is based on polyacrylates, polysiloxanes, polyvinyl acetate or on block copolymers containing at least one block based on acrylate, acrylic acid or methacrylate; oxidized polyolefin; ethylene vinyl acetate copolymer; ethylene acrylic acid copolymer; partially hydrolized polyvinyl acetate; with C₁₂-C₂₅alkyl substituted anhydrides; epoxidized soybean oil: or esters of polyhydric alcohols with saturated or unsaturated C₁₂-C₂₅carboxylic acids,
d) a monomeric or polymeric dispersing or solvating agent having amphiphilic properties containing an amido group or an ethoxylated amino group being a compound of the formula I 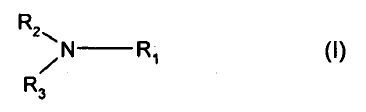 wherein,
R₁ is hydrogen, -CH₂CH₂OH, -CH₂CH₂OCH₂CH₂OH or -CH₂CH₂OCH₂CH₂OCH₂CH₂OH; or 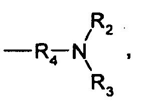
R₂ is 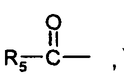 C₆-C₂₅alkyl or C₆-C₂₅alkenyl,
R₃ is hydrogen, -CH₂CH₂OH, -CH₂CH₂OCH₂CH₂OH or -CH₂CH₂OCH₂CH₂OCH₂CH₂OH,
R₄ is a direct bond or C₂-C₁₈alkylene, and
R₅ is C₆-C₂₅alkyl or C₆-C₂₅alkenyl; with the proviso that the compound of formula I contains at least an amido group or an ethoxylated amino group, and
e) a stabilizer.

2. A composition according to claim 1, wherein component (a) is a polyolefin or polystyrene.

3. A composition according to claim 1, wherein component (a) is polyethylene or polypropylene.

4. A composition according to claim 1, wherein component (b) is a montmorillonite, bentonite, beidelite, mica, hectorite, saponite, nontronite, sauconite, vermiculite, ledikite, magadite, kenyaite, stevensite, volkonskoite, hydrotalcite, illite, kaolinite, wollastonite, attapulgite, talc or silica or a mixture thereof.

5. A composition according to claim 1, wherein component (e) is a phenolic antioxidant, an organic phosphite or phosphonite, a thio-synergist, a light stabilizer, a benzofuranone, a hydroxylamine and/or a metal deactivator.

6. A composition according to claim 1, wherein component (b) is present in an amount of from 0.1 to 70 %, based on the weight of component (a).

7. A composition according to claim 1, wherein component (c) is present in an amount from 0.01 to 10 %, based on the weight of component (a).

8. A composition according to claim 1, wherein component (d) is present in an amount from 0.01 to 10 %, based on the weight of component (a).

9. A composition according to claim 1, wherein component (e) is present in an amount from 0.01 to 10 %, based on the weight of component (a).

10. A composition according to claim 1, wherein additional additives are present besides components (a), (b), (c), (d) and (e).

11. An additive blend, which comprises
α) a monomeric or polymeric dispersing or solvating agent free of nitrogen atoms having amphiphilic properties, which is based on polyacrylates, polysiloxanes, polyvinyl acetate or on block copolymers containing at least one block based on acrylate, acrylic acid or methacrylate; oxidized polyolefin; ethylene vinyl acetate copolymer; ethylene acrylic acid copolymer; partially hydrolized polyvinyl acetate; with C₁₂-C₂₅alkyl substituted anhydrides; epoxidized soybean oil: or esters of polyhydric alcohols with saturated or unsaturated C₁₂-C₂₅carboxylic acids,
β) a monomeric or polymeric dispersing or solvating agent having amphiphilic properties containing an amido group or an ethoxylated amino group being a compound of the formula I 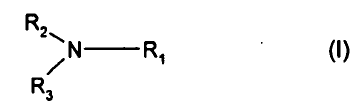 wherein,
R₁ is hydrogen, -CH₂CH₂OH, -CH₂CH₂OCH₂CH₂OH or -CH₂CH₂OCH₂CH₂OCH₂CH₂OH; or 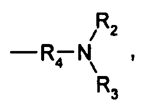
R₂ is 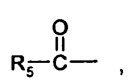 C₆-C₂₅alkyl or C₆-C₂₅alkenyl,
R₃ is hydrogen, -CH₂CH₂OH, -CH₂CH₂OCH₂CH₂OH or -CH₂CH₂OCH₂CH₂OCH₂CH₂OH,
R₄ is a direct bond or C₂-C₁₈alkylene, and
R₅ is C₆-C₂₅alkyl or C₆-C₂₅alkenyl; with the proviso that the compound of formula I contains at least an amido group or an ethoxylated amino group, and
γ) a stabilizer.

12. An additive blend according to claim 11, wherein the weight ratio of the components (α) : (β) : (γ) is from 100 : 0.01 : 0.01 to 0.01 : 0.01 : 100 to 0.01 : 100 : 0.01.

13. A process for stabilising synthetic polymers containing a filler against oxidative, thermal or light-induced degradation, which comprises incorporating therein, or applying thereto, at least an additive blend according to claim 11.

14. Use of an additive blend according to claim 11 as stabilisers for synthetic polymer containing a filler against oxidative, thermal or light-induced degradation.

## Patentansprüche

1. Stabilisierte Zusammensetzung, umfassend
a) ein synthetisches Polymer, das oxidativem, thermischem oder durch Licht induziertem Abbau unterliegt,
b) einen Füllstoff,
c) ein monomeres oder polymeres dispergierendes oder solvatisierendes Mittel, das frei von StickstoffAtomen ist, mit amphiphilen Eigenschaften, welches auf Polyacrylaten, Polysiloxanen, Polyvinylacetat oder auf Block-Copolymeren, die mindestens einen Block enthalten, der auf Acrylat, Acrylsäure oder Methacrylat basiert; oxidiertem Polyolefin; EthylenVinylacetat-Copolymer; Ethylen-Acrylsäure-Copolymer; teilweise hydrolysiertem Polyvinylacetat; mit C₁₂-C₂₅-Alkyl substituierten Anhydriden; epoxidiertem Sojabohnenöl oder Estern von mehrwertigen Alkoholen mit gesättigten oder ungesättigten C₁₂-C₂₅-Carbonsäuren basiert,
d) ein monomeres oder polymeres dispergierendes oder solvatisierendes Mittel mit amphiphilen Eigenschaften, das eine Amido-Gruppe oder eine ethoxylierte Amino-Gruppe enthält, das eine Verbindung der Formel I 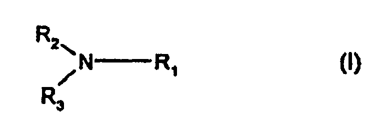 darstellt,
worin
R₁ Wasserstoff, -CH₂CH₂OH, -CH₂CH₂OCH₂CH₂OH oder -CH₂CH₂OCH₂CH₂OCH₂CH₂OH; oder 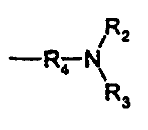 darstellt,
R₂ 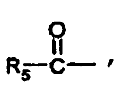 C₆-C₂₅-Alkyl oder C₆-C₂₅-Alkenyl darstellt,
R₃ Wasserstoff, -CH₂CH₂OH, -CH₂CH₂OCH₂CH₂OH oder -CH₂CH₂OCH₂CH₂OCH₂CH₂OH darstellt,
R₄ eine direkte Bindung oder C₂-C₁₈-Alkylen darstellt, und
R₅ C₆-C₂₅-Alkyl oder C₆-C₂₅-Alkenyl darstellt; mit der Maßgabe, dass die Verbindung der Formel I mindestens eine Amido-Gruppe oder eine ethoxylierte Amino-Gruppe enthält, und
e) einen Stabilisator.

2. Zusammensetzung nach Anspruch 1, worin Komponente (a) ein Polyolefin oder Polystyrol darstellt.

3. Zusammensetzung nach Anspruch 1, worin Komponente (a) Polyethylen oder Polypropylen darstellt.

4. Zusammensetzung nach Anspruch 1, worin Komponente (b) ein Montmorillonit, Bentonit, Beidelit, Glimmer, Hectorit, Saponit, Nontronit, Sauconit, Vermiculit, Ledikit, Magadit, Kenyait, Stevensit, Volkonskoit, Hydrotalcit, Illit, Kaolinit, Wollastonit, Attapulgit, Talkum oder Siliciumdioxid oder ein Gemisch davon darstellt.

5. Zusammensetzung nach Anspruch 1, worin Komponente (e) ein phenolisches Antioxidationsmittel, ein organisches Phosphit oder Phosphonit, einen Thiosynergisten, einen LichtStabilisator, ein Benzofuranon, ein Hydroxylamin und/oder einen Metall-Desaktivator darstellt.

6. Zusammensetzung nach Anspruch 1, worin Komponente (b) in einer Menge von 0,1 bis 70 %, bezogen auf das Gewicht von Komponente (a), vorliegt.

7. Zusammensetzung nach Anspruch 1, worin Komponente (c) in einer Menge von 0,01 bis 10 %, bezogen auf das Gewicht von Komponente (a), vorliegt.

8. Zusammensetzung nach Anspruch 1, worin Komponente (d) in einer Menge von 0,01 bis 10 %, bezogen auf das Gewicht von Komponente (a), vorliegt.

9. Zusammensetzung nach Anspruch 1, worin Komponente (e) in einer Menge von 0,01 bis 10 %, bezogen auf das Gewicht von Komponente (a), vorliegt.

10. Zusammensetzung nach Anspruch 1, worin weitere Additive neben Komponenten (a), (b), (c), (d) und (e) vorliegen.

11. Additiv-Blend, das
α) ein monomeres oder polymeres dispergierendes oder solvatisierendes Mittel, das frei von StickstoffAtomen ist, mit amphiphilen Eigenschaften, welches auf Polyacrylaten, Polysiloxanen, Polyvinylacetat oder auf Block-Copolymeren, die mindestens einen Block enthalten, der auf Acrylat, Acrylsäure oder Methacrylat basiert; oxidiertem Polyolefin; EthylenVinylacetat-Copolymer; Ethylen-Acrylsäure-Copolymer; teilweise hydrolysiertem Polyvinylacetat; mit C₁₂-C₂₅-Alkyl substituierten Anhydriden; epoxidiertem Sojabohnenöl oder Estern von mehrwertigen Alkoholen mit gesättigten oder ungesättigten C₁₂-C₂₅-Carbonsäuren basiert,
β) ein monomeres oder polymeres dispergierendes oder solvatisierendes Mittel mit amphiphilen Eigenschaften, das eine Amido-Gruppe oder eine ethoxylierte Amino-Gruppe enthält, das eine Verbindung der Formel I 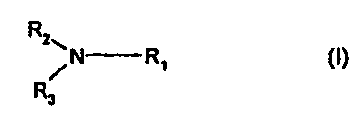 darstellt,
worin,
R₁ Wasserstoff, -CH₂CH₂OH, -CH₂CH₂OCH₂CH₂OH oder -CH₂CH₂OCH₂CH₂OCH₂CH₂OH; oder 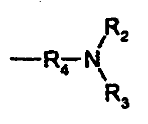 darstellt,
R₂ 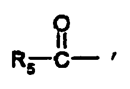 C₆-C₂₅-Alkyl oder C₆-C₂₅-Alkenyl darstellt,
R₃ Wasserstoff, -CH₂CH₂OH, -CH₂CH₂OCH₂CH₂OH oder -CH₂CH₂OCH₂CH₂OCH₂CH₂OH darstellt,
R₄ eine direkte Bindung oder C₂-C₁₈-Alkylen darstellt, und
R₅ C₆-C₂₅-Alkyl oder C₆-C₂₅-Alkenyl darstellt; mit der Maßgabe, dass die Verbindung der Formel I mindestens eine Amido-Gruppe oder eine ethoxylierte Amino-Gruppe enthält, und
γ) einen Stabilisator umfasst.

12. Additiv-Blend nach Anspruch 11, worin das Gewichtsverhältnis von den Komponenten (α):(β):(γ) von 100 : 0,01 : 0,01 bis 0,01 : 0,01 : 100 bis 0,01 : 100 : 0,01 ist.

13. Verfahren zum Stabilisieren von synthetischen Polymeren, die einen Füllstoff enthalten, gegen oxidativen, thermischen oder durch Licht induzierten Abbau, das Einarbeiten darin oder Applizieren darauf von mindestens einem Additiv-Blend nach Anspruch 11 umfasst.

14. Verwendung von einem Additiv-Blend nach Anspruch 11 als Stabilisatoren für synthetisches Polymer, das einen Füllstoff enthält, gegen oxidativen, thermischen oder durch Licht induzierten Abbau.

## Revendications

1. Composition stabilisée comprenant
a) un polymère de synthèse sujet à la dégradation oxydative, thermique ou photoinduite,
b) une charge,
c) un agent de dispersion ou de solvatation monomère ou polymère dépourvu d'atomes d'azote ayant des propriétés amphiphiles, à base de polyacrylates, de polysiloxanes, de polyacétate de vinyle ou à base de copolymères blocs contenant au moins un bloc à base d'acrylate, d'acide acrylique ou de méthacrylate ; de polyoléfine oxydée ; de copolymère éthylène-acétate de vinyle ; de copolymère éthylène-acide acrylique ; de polyacétate de vinyle partiellement hydrolysé ; avec des anhydrides substitués par alkyle en C₁₂-C₂₅ ; d'huile de soja époxydée ; ou d'esters d'alcools polyhydriques avec des acides carboxyliques en C₁₂-C₂₅ saturés ou insaturés,
d) un agent de dispersion ou de solvatation monomère ou polymère ayant des propriétés amphiphiles contenant un groupement amido ou un groupement amino éthoxylé qui est un composé de formule I 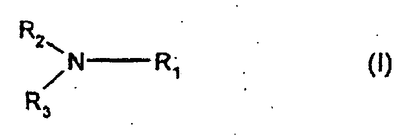 dans laquelle,
R₁ est hydrogène, -CH₂CH₂OH, -CH₂CH₂OCH₂CH₂OH ou -CH₂CH₂OCH₂CH₂OCH₂CH₂OH ; ou 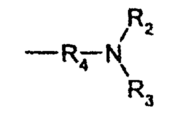
R₂ est 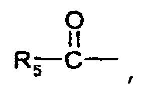 alkyle en C₆-C₂₅ ou alcényle en C₆-C₂₅,
R₃ est hydrogène, -CH₂CH₂OH, -CH₂CH₂OCH₂CH₂OH ou -CH₂CH₂OCH₂CH₂OCH₂CH₂OH,
R₄ est une liaison directe ou alkylène en C₂-C₁₈, et
R₅ est alkyle en C₆-C₂₅ ou alcényle en C₆-C₂₅ ; à condition que le composé de formule I contienne au moins un groupement amido ou un groupement amino éthoxylé, et
e) un stabilisant.

2. Composition selon la revendication 1, **caractérisée en ce que** le composant (a) est une polyoléfine ou le polystyrène.

3. Composition selon la revendication 1, **caractérisée en ce que** le composant (a) est le polyéthylène ou le polypropylène.

4. Composition selon la revendication 1, **caractérisée en ce que** le composant (b) est une montmorillonite, une bentonite, une beidellite, un mica, une hectorite, une saponite, une nontronite, une sauconite, une vermiculite, une ledikite, une magadite, une kenyaite, une stevensite, une volkonskoite, une hydrotalcite, une illite, une kaolinite, une wollastonite, une attapulgite, un talc ou une silice ou un mélange de ceux-ci.

5. Composition selon la revendication 1, **caractérisée en ce que** le composant (e) est un antioxydant phénolique, un phosphite ou phosphonite organique, un thio-synergiste, un photostabilisant, une benzofuranone, une hydroxylamine et/ou un désactivateur de métaux.

6. Composition selon la revendication 1, **caractérisée en ce que** le composant (b) est présent dans une quantité de 0,1 à 70 %, sur la base du poids du composant (a).

7. Composition selon la revendication 1, **caractérisée en ce que** le composant (c) est présent dans une quantité de 0,01 à 10 %, sur la base du poids du composant (a).

8. Composition selon la revendication 1, **caractérisée en ce que** le composant (d) est présent dans une quantité de 0,01 à 10 %, sur la base du poids du composant (a).

9. Composition selon la revendication 1, **caractérisée en ce que** le composant (e) est présent dans une quantité de 0,01 à 10 %, sur la base du poids du composant (a).

10. Composition selon la revendication 1, **caractérisée en ce que** des additifs supplémentaires sont présents à part les composants (a), (b), (c), (d) et (e).

11. Mélange d'additifs, **caractérisé en ce qu'**il comprend
α) un agent de dispersion ou de solvatation monomère ou polymère dépourvu d'atomes d'azote ayant des propriétés amphiphiles, à base de polyacrylates, de polysiloxanes, de polyacétate de vinyle ou à base de copolymères blocs contenant au moins un bloc à base d'acrylate, d'acide acrylique ou de méthacrylate ; de polyoléfine oxydée ; de copolymère éthylène-acétate de vinyle ; de copolymère éthylène-acide acrylique ; de polyacétate de vinyle partiellement hydrolysé ; avec des anhydrides substitués par alkyle en C₁₂-C₂₅ ; d'huile de soja époxydée ; ou d'esters d'alcools polyhydriques avec des acides carboxyliques en C₁₂-C₂₅ saturés ou insaturés,
β) un agent de dispersion ou de solvatation monomère ou polymère ayant des propriétés amphiphiles contenant un groupement amido ou un groupement amino éthoxylé qui est un composé de formule I 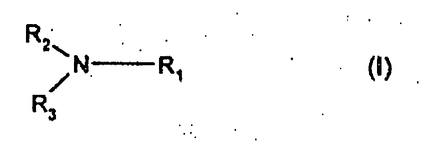 dans laquelle,
R₁ est hydrogène, -CH₂CH₂OH, -CH₂CH₂OCH₂CH₂OH ou -CH₂CH₂OCH₂CH₂OCH₂CH₂OH ; ou 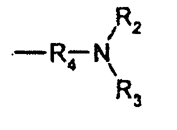
R₂ est 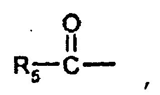 alkyle en C₆-C₂₅ ou alcényle en C₆-C₂₅,
R₃ est hydrogène, -CH₂CH₂OH, -CH₂CH₂OCH₂CH₂OH ou -CH₂CH₂OCH₂CH₂OCH₂CH₂OH,
R₄ est une liaison directe ou alkylène en C₂-C₁₈, et
R₅ est alkyle en C₆-C₂₅ ou alcényle en C₆-C₂₅ ; à condition que le composé de formule I contienne au moins un groupement amido ou un groupement amino éthoxylé, et
γ) un stabilisant.

12. Mélange d'additifs selon la revendication 11, **caractérisé en ce que** le rapport en poids des composants (α) : (β) : (γ) est de 100 : 0,01 : 0,01 à 0,01 : 0,01 : 100 à 0,01 : 100 : 0,01.

13. Procédé de stabilisation de polymères de synthèse contenant une charge contre la dégradation oxydative, thermique ou photoinduite, **caractérisé en ce qu'**il comprend l'incorporation dans ceux-ci, ou l'application à ceux-ci, d'au moins un mélange d'additifs selon la revendication 11.

14. Utilisation d'un mélange d'additifs selon la revendication 11 en tant que stabilisants pour un polymère de synthèse contenant une charge contre la dégradation oxydative, thermique ou photoinduite.
